# EUROPEAN PATENT APPLICATION

(11) **EP 4 727 053 A1**
(43) Date of publication of application: **15.04.2026**
(21) Application number: 24819205.6
(22) Date of filing: 27.05.2024
(51) Int. Cl.: H04L 9/08

(54) **FILE MANAGEMENT TECHNOLOGY USING POSITION AUTHENTICATION**

(30) Priority: 07.06.2023 JP 2023094434
(71) Applicant: PASSLOGY CO., LTD., Tokyo 101-0051 (JP)
(72) Inventor: OGAWA Hideharu, Tokyo 101-0051 (JP); SUZUKI Takeo, Tokyo 101-0051 (JP); NAKA Tamiyoshi, Tokyo 101-0051 (JP)
(74) Representative: Hoffmann Eitle
(86) International application number: PCT/JP2024/019451
(87) International publication number: WO 2024/252973

(57) **Abstract**

The present invention is a file management system that allows for transmission of a file between a first information communication terminal device of a first user and a second information communication terminal device of a second user. In the first information communication terminal device, the file, the receiving user, and the receipt location of the file are specified, the file are encrypted to generate an encrypted file, and the receipt location is transmitted to a file management server. In the second information communication terminal device, the encrypted file are acquired, and position information acquired by the key terminal device of the second user is transmitted to the file management server. The file management server performs determination of position authentication based on the receipt location. If the position authentication has been successful as a result of the determination, the encrypted file are decrypted to obtain the original file in the second information communication terminal device.

## Description

### TECHNICAL FIELD

The present invention relates to a file management technology using position authentication, and relates in particular to a file management system and a file management method using position authentication by utilizing encryption/decryption technology.

### BACKGROUND ART

File sharing services (which may also be referred to as online storage services, cloud storage services, or the like) which allow users to back up the file owned by the users to a file management server on a network so that they can be restored later or delivered to other users, are known.

For example, Patent Document 1 below discloses an online storage device that stores, along with a public key, hash data encrypted by means of encryption data, and encrypts content by using the encrypted hash data.

In addition, public-key cryptography can be utilized to encrypt/decrypt file. In public-key cryptography, a key pair consisting of a private key and a public key is generated for a user. A public key is a key that is utilized to encrypt a file and can be made public to other users. On the other hand, a private key is a key that is used to decrypt a file, and the user should manage it secretly.

In addition, Non-Patent Document 1 below discloses a proxy re-encryption technology, in which a user Z, other than a user X and a user Y, can create an encrypted file B that is encrypted with a public key of the user Y from an encrypted file A encrypted with a public key of the user X, with the user Z not knowing/obtaining the private keys of the user X and the user Y. The information for converting the encrypted file A to the encrypted file B may be referred to as a proxy key.

### CITATION LIST

### PATENT DOCUMENT

Patent Document 1: Japanese Patent Publication No. 2014-507841

### NON-PATENT DOCUMENT

Non-Patent Document 1: Sherman S.M. CHOW, Weng JIAN, Yanjiang YANG, and Robert H. DENG. (2010). Efficient unidirectional proxy reencryption. Progress in Cryptology - AFRICACRYPT 2010: Third International Conference on Cryptology in Africa, Stellenbosch, South Africa, May 3-6: Proceedings. vol. 6055, pp. 316-332. Research Collection School Of Information Systems. (https://ink.library.smu.edu.sg/sis_research/1316). May, 2010

### SUMMARY OF INVENTION

### PROBLEMS TO BE SOLVED BY INVENTION

Private key management is extremely important in public-key cryptography and proxy re-encryption. For this reason, a technology is strongly desired that allows for processing such as encryption/decryption and re-encryption of a file while a user is secretly managing the private key in a specific device, without allowing the private key to be known to/obtained by external devices.

In addition, in order for a user to deliver a file to other users, a file transmission procedure is widely used in which such file is encrypted with a password and transmitted to other users as an attachment to an e-mail, followed by the password being transmitted in the body text of another e-mail. However, there is a risk of e-mails transmitted over the communication network being leaked or eavesdropped on, and as long as the password is transmitted in the body text of an e-mail, such file transmission procedure cannot be said to be perfectly secure.

Accordingly, the present invention aims to provide a new file transmission scheme that allows a user to securely deliver a file to a desired counterparty via a communication network.

More specifically, an object of the present invention is to provide a file management service that allows a file encrypted by a sending user (a first user) to be securely decrypted by a receiving user (a second user), without directly transmitting the file encrypted with a password (an encryption key) and the password over a communication network.

Another object of the present invention is to provide a file management service that allows a file encrypted by a sending user to be securely delivered to a receiver, and allows a counterparty (a receiving user), who received an e-mail, to securely decrypt the encrypted file, even when there is a risk of the e-mail transmitted over a communication network being leaked or eavesdropped on.

Alternatively, the invention aims to propose a new scheme of performing control so that a particular user may enjoy a particular service.

### MEANS FOR SOLVING THE PROBLEMS

The present invention for solving the above-described problems is configured to include the matters specifying the invention or technical features indicated below.

Specifically, the present invention according to an aspect is a file management system that allows for transmission of a file between a first information communication terminal device of a first user and a second information communication terminal device of a second user. The file management system is configured to include a file management server that is communicably connectable with each of the first information communication terminal device and the second information communication terminal device, and a key terminal device that is communicably connectable with the file management server and is capable of acquiring geographical position information. The file management server acquires, from the first information communication terminal device, destination information containing at least an identifier of the second user and a receipt location of the file, receive, from the key terminal device, a position authentication request containing geographical position information, performs determination of the success or failure of position authentication based on the receipt location contained in the destination information and the geographical position information contained in the position authentication request to transmit a result of the determination to the second information communication terminal device, and the second information communication terminal device decrypts an encrypted file, which are obtained by encrypting the file, if the result of the determination indicates that the position authentication has been successful.

The first information communication terminal device generates a shared key according to a predetermined function (e.g., a random number function), and creates the encrypted file using the generated shared key.

The first information communication terminal device generates a first ciphertext based on the shared key using a public key, and transmits the generated first ciphertext to the file management server. For example, the first ciphertext includes the shared key encrypted by using the public key.

The second information communication terminal device generates an ephemeral key pair consisting of an ephemeral private key and an ephemeral public key, according to a predetermined key generation algorithm, and stores the ephemeral private key from among the ephemeral key pair. The key terminal device stores the ephemeral public key from among the ephemeral key pair. The file management server generates a second ciphertext by using the ephemeral public key in cooperation with the key terminal device, and transmits the generated second ciphertext to the second information communication terminal device. For example, the file management server generates a proxy key by using a primary private key held by the key terminal device and the ephemeral public key, and generates the second ciphertext by applying the generated proxy key to the first ciphertext. Alternatively, the key terminal device acquires the shared key by decrypting the first ciphertext using the primary private key it holds, and generates the second ciphertext by encrypting the shared key using the ephemeral public key.

The second information communication terminal device decrypts the second ciphertext using the ephemeral private key in order to acquire the shared key, and decrypts the encrypted file by using the shared key acquired by decrypting the second ciphertext.

The file management server acquires the ephemeral public key from the second information communication terminal device, and transmits the acquired ephemeral public key to the key terminal device.

The file management server acquires the ephemeral public key in a process of login authentication with the second information communication terminal device.

The file management server determines the success or failure of the login authentication through multi-factor authentication based on possession or use of the key terminal device.

The receipt location is geographical position information specified by the first user. In addition, the geographical position information is specified based on a geographical map displayed on a user interface of the first information communication terminal device.

The file management server determines the success or failure of the position authentication based on the geographical position information of the second information communication terminal device. In this case, the file management server determines that the position authentication has been successful if each of the geographical position information contained in the position authentication request and the geographical position information of the second information communication terminal device corresponds to the receipt location contained in the destination information.

The geographical position information of the second information communication terminal device is either GPS coordinates or a global IP address.

Further, the present invention according to another aspect is a file management server that is communicably connectable to each of a first information communication terminal device of a first user, a second information communication terminal device of a second user, and a key terminal device. The file management server is configured to perform: processing of acquiring, from the first information communication terminal device, destination information containing at least an identifier of the second user and a receipt location of a file; processing of receiving a position authentication request containing geographical position information acquired by the key terminal device; processing of performing determination of the success or failure of position authentication based on the receipt location contained in the destination information and the geographical position information contained in the position authentication request; and if the position authentication has been successful, processing of transmitting, to the second information communication terminal device, a ciphertext to be used for decrypting an encrypted file obtained by the first information communication terminal device encrypting the file.

Further, the present invention according to another aspect is a file transmission method that allows for transmission of a file between a first information communication terminal device of a first user and a second information communication terminal device of a second user. The method comprises: specifying, in the first information communication terminal device, destination information containing an identifier of the second user and a receipt location of the file; generating an encrypted file by encrypting the file in the first information communication terminal device; acquiring the specified receipt location in a file management server; storing the generated encrypted file in the second information communication terminal device; transmitting geographical position information acquired in a key terminal device possessed by the second user from the key terminal device to the file management server; determining whether the geographical position information corresponds to the specified receipt location in the file management server to transmit a result of the determination to the second information communication terminal device; and if the result of the determination indicates that the geographical position information corresponds to the specified receipt location, decrypting the encrypted file to acquire the original file in the second information communication terminal device.

The creating the encrypted file includes: generating a shared key according to a predetermined function (e.g., a random number function); and creating the encrypted file using the generated shared key.

The method further comprises: generating a first ciphertext based on the shared key using a public key, and transmitting the generated first ciphertext to the file management server.

The method comprises: generating an ephemeral key pair consisting of an ephemeral private key and an ephemeral public key in accordance with a predetermined key generation algorithm in the second information communication terminal device; storing the ephemeral private key from among the ephemeral key pair in the second information communication terminal device; storing the ephemeral public key from among the ephemeral key pair in the key terminal device; generating, the file management server, a second ciphertext by using the ephemeral public key in cooperation with the key terminal device; and storing the generated second ciphertext in the second information communication terminal device.

The method further comprises decrypting the generated second ciphertext using the ephemeral private key in order to acquire the shared key in the second information communication terminal device. The decrypting the encrypted file includes decrypting the encrypted file using the shared key acquired by decrypting the second ciphertext.

The method further comprises: acquiring, in the file management server, the ephemeral public key from the second information communication terminal device; and transmitting the acquired ephemeral public key to the key terminal device.

The method comprises acquiring, in the file management server, the ephemeral public key in a process of login authentication with the second information communication terminal device.

The method comprises determining, in the file management server, the success or failure of the login authentication through multi-factor authentication based on possession or use of the key terminal device.

Further, the invention according to another aspect is a file management method to be executed by a file management server that is communicably connectable to each of a first information communication terminal device of a first user, a second information communication terminal device of a second user, and a key terminal device. The method comprises: acquiring, from the first information communication terminal device, destination information containing at least an identifier of the second user and a receipt location of a file; receiving a position authentication request containing geographical position information acquired by the key terminal device; performing determination of the success or failure of position authentication based on the receipt location contained in the destination information and the geographical position information contained in the position authentication request; and if the position authentication has been successful, transmitting, to the second information communication terminal device, information (ciphertext) to be used for decrypting an encrypted file obtained by encrypting the file by the first information communication terminal device.

Further, the present invention according to another aspect is a system for controlling, by a first information communication terminal device of a first user, whether or not a second user can enjoy benefit of a service in a second information communication terminal device. The system comprises: a server that is communicably connectable with each of the first information communication terminal device and the second information communication terminal device; and a key terminal device that is communicably connectable to the server and is capable of acquiring geographical position information. The server acquires, from the first information communication terminal device, destination information containing at least an identifier of the second user and a location to enjoy the services, receives a position authentication request containing geographical position information from the key terminal device, and performs determination of the success or failure of position authentication based on the location for enjoying the benefit of the service contained in the destination information and the geographical position information contained in the position authentication request to transmit a result of the determination to the second information communication terminal device. The second information communication terminal device operates such that the benefit of the service may be provided if the result of the determination indicates that the position authentication has been successful.

Further, the present invention according to another aspect may be a computer program for causing a computing device to perform the above-described method(s), and a machine-readable recording medium that carries, in a non-transitory manner, the computer program.

It should be noted that, in the present disclosure, the present invention is described as a file management system and a file transmission system; however, the present invention may be understood as, for example, an encryption/decryption system and a method, regardless of the name of the invention.

In the present disclosure, the term "means" does not merely mean a physical means but also encompasses the case where the functions of such means are implemented by software. In addition, a function of one means may be implemented by two or more physical means, and functions of two or more means may be implemented by one physical means.

Further, in the present disclosure, the term "system" includes an ensemble where multiple apparatuses (or functional modules implementing specific functions) are logically assembled, regardless of whether each apparatus or functional module is physically configured as a single entity or as a separate entity.

### ADVANTAGEOUS EFFECTS OF INVENTION

The present invention allows a user to securely deliver a file to a desired counterparty via a communication network. In particular, the present invention allows a file encrypted by a sending user to be securely decrypted by a receiving user, without directly transmitting the file encrypted with a password (an encryption key) and the password over a communication network.

In addition, the present invention allows a file encrypted by a sending user to be securely delivered to a receiving user via file management server, and allows the counterparty, who received an e-mail, to securely decrypt the encrypted file, even when there is a risk of the e-mail transmitted over a communication network being leaked or eavesdropped on.

Other technical features, objects, and effects or advantages of the present invention will become apparent by the following embodiments described with reference to the attached drawings.

### BRIEF DESCRIPTION OF DRAWINGS

FIG. 1 is a block diagram showing a schematic configuration example of a file management system according to an embodiment of the present invention.
FIG. 2 is a sequence chart for describing a schematic processing example in a file management system according to an embodiment of the present invention.
FIG. 3 is a sequence chart for describing a schematic processing example in a file management system according to an embodiment of the present invention.
FIG. 4 is a sequence chart for describing a processing example for proxy re-encryption in a file management system according to an embodiment of the present invention.
FIG. 5 is a sequence chart for describing a processing example for creating a second ciphertext by a key terminal device in a file management system according to an embodiment of the present invention.
FIG. 6 is a flowchart for describing a processing example for decrypting an encrypted file in a file management system according to an embodiment of the present invention.
FIG. 7 is a diagram showing a start screen example displayed on a user interface of an information communication terminal device in a file management system according to an embodiment of the present invention.
FIG. 8 is a diagram showing a destination selection screen example displayed on a user interface of an information communication terminal device in a file management system according to an embodiment of the present invention.
FIG. 9 is a diagram showing a receipt location registration screen example displayed on a user interface of an information communication terminal device in a file management system apparatus according to an embodiment of the present invention.
FIG. 10 is a diagram showing an encrypted file selection screen example displayed on a user interface of an information communication terminal device in a file management system apparatus according to an embodiment of the present invention.
FIG. 11 is a diagram showing a decryption file selection screen example displayed on a user interface of an information communication terminal device in a file management system according to an embodiment of the present invention.
FIG. 12 is a flowchart for describing a processing example for position authentication in a file management system according to an embodiment of the present invention.
FIG. 13 is a diagram showing a hardware configuration example of a computing device in a system according to an embodiment of the present invention.

### DESCRIPTION OF EMBODIMENTS

Embodiments of the present invention will now be described below with reference to the drawings. However, the embodiments described below are only illustrations, and there is no intention to exclude the application of various variations or technologies not expressly stated below. The present invention may be implemented in various variations (such as by combining each embodiment) without departing from the gist of the invention. In addition, the same or similar parts will be denoted with the same or similar references in the following descriptions of the drawings. The drawings are schematic and do not necessarily correspond to the actual dimensions or ratios. Parts may also be included wherein the dimensional relationship or ratio therebetween is different among the drawings.

### <First Embodiment>

The present embodiment is characterized in that when a file is to be transmitted between a first user and a second user, the first user, who is the sender of the file, encrypts the file and specifies a location to receive the file, and the second user, who is the recipient of the file, can decrypt the file only when the second user is located at the specified receipt location. Whether the second user is located at the specified receipt location is determined based on the position information of, for example, a smartphone that functions as a key terminal device possessed by the second user (hereinafter, the smartphone will be described as the "key terminal device").

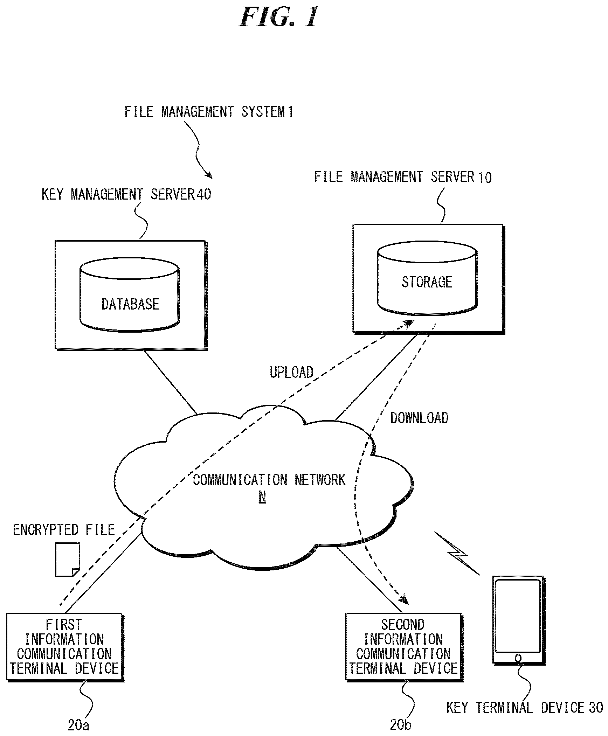

FIG. 1 is a block diagram showing a schematic configuration example of a file management system according to an embodiment of the present invention. As shown in FIG. 1, the file management system 1 of the present embodiment is configured to include a file management server 10, multiple information communication terminal devices 20, and a key terminal device 30, which are communicably interconnected via a communication network N. In addition, the file management system 1 is further configured to include a key management server 40. The file management system 1 provides so-called "network storage services".

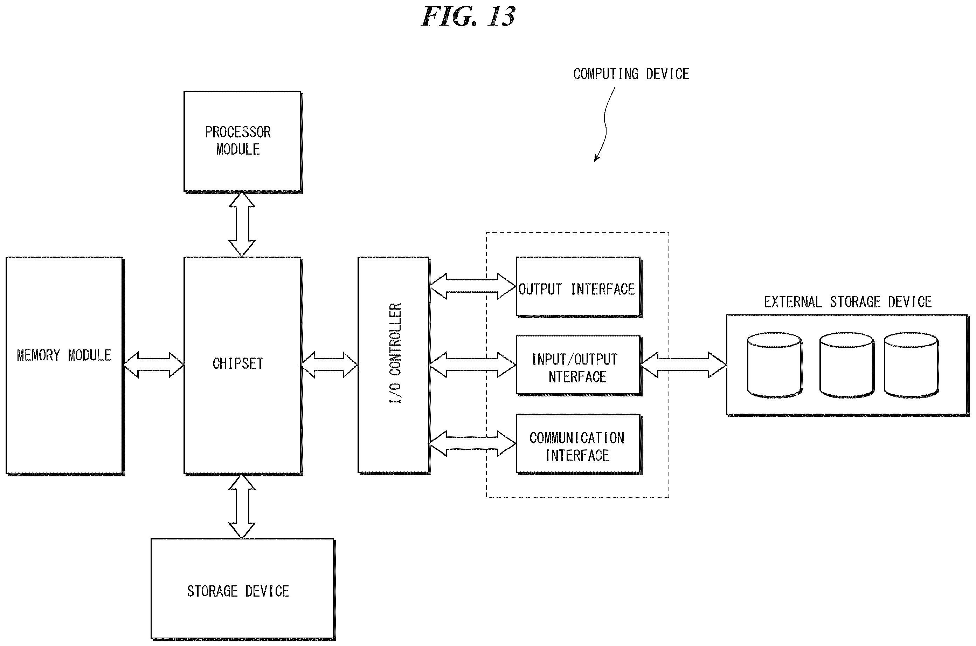

The file management server 10 is a computing device that provides the network storage services to users. The hardware configuration of the file management server 10 is shown, for example, in FIG. 13, but the detailed description of such configuration will be omitted because it is already known. The file management server 10 may be a storage system constructed by, for example, a storage area network (SAN).

The information communication terminal device 20 is a computing device operated by a user, examples of which include, without limitation, a desktop computer, a laptop computer, a tablet computer, a smartphone, a feature phone, and other intelligent devices. The information communication terminal device 20 may be, for example, a computing device virtualized by desktop virtualization technology.

More specifically, the information communication terminal device 20 is configured from hardware resources, such as a CPU (processor), a chipset, memory, a communication module, and a user interface, and software resources such as an operating system (which may be configured to include, for example, a kernel, various device drivers, standard libraries, etc.; hereinafter referred to as the "OS"). The information communication terminal device 20 executes various application programs on the OS under the control of the processor, and achieves desired functions. In the present disclosure, the information communication terminal device 20 may be implemented with, for example, an e-mail client program that realizes the function of transmitting/receiving e-mails and an encryption/decryption client program. In addition, the information communication terminal device 20 may be implemented with a browser program that realizes browser functions, and other programs.

In the present disclosure, one of the multiple information communication terminal devices 20 is a first information communication terminal device 20a operated by a first user (sending user) who is the sender of the file, and another one of the multiple information communication terminal devices 20 is a second communication terminal device 20b operated by a second user (receiving user) who is the recipient of the file. Specifically, the file transmission (delivery) between a sending user and a receiving user is made possible by: the sending user operating the first information communication terminal device 20a to upload the file to the file management server 10; and one or more receiving users, specified by the sending user, downloading the file to the second information communication terminal device 20b. As will be described below, the second information communication terminal device 20b is assigned with a primary key pair including a primary private key and a primary public key. In other words, the receiving user is the key owner who owns the primary key pair. In the present disclosure, when specifying a receiving user to whom the file is to be sent, the sending user also specifies where the receiving user should receive the file (receipt location). For example, the sending user may specify the receiving user's office and/or home as the receipt location.

The second information communication terminal device 20b also generates an ephemeral key pair for ephemeral use when downloading a file from the file management server 10. The generated ephemeral key pair consists of an ephemeral private key and an ephemeral public key. Typically, the second information communication terminal device 20b secretly stores the generated ephemeral private key in memory. Secretly storing the ephemeral private key means that the ephemeral private key will never be leaked to the outside of the second information communication terminal device 20b. In other words, in the file delivery as described above via the communication network N, the ephemeral private key will not be known/obtained by any device other than the second information communication terminal device 20b.

It should be noted here that the sending user and the receiving user may be the same. For example, a user can utilize the file management system 1 for backing up a file. Specifically, a user may back up the file on the first information communication terminal device 20a to the file management system 1 and restore the file on the second information communication terminal device 20b. Alternatively, the first information communication terminal device 20a and the second information communication terminal device 20b may be the same.

The key terminal device 30 is a computing device operated by a receiving user, examples of which include, without limitation, a desktop computer, a laptop computer, a tablet computer, a smartphone, a feature phone, and other intelligent devices. The key terminal device 30 may be, for example, a computing device virtualized by desktop virtualization technology. Alternatively, the key terminal device 30 may be a dedicated device that allows for the processing related to public-key cryptography and the management of key pairs. A mobile device, such as a smartphone, is an aspect of the key terminal device 30. In the present disclosure, the key terminal device 30 has the function of acquiring geographical position information from, for example, a GPS system. The key terminal device 30 may also be implemented with a key management client program that realizes functions based on public-key cryptography. The key terminal device 30 is associated with the second information communication terminal device 20b (encryption/decryption client program) via, for example, an identifier (e.g., an e-mail address) of the receiving user. Alternatively, the key terminal device 30 may be the same as the second information communication terminal device 20b.

For example, the key terminal device 30 generates a primary key pair consisting of a primary private key and a primary public key, and secretly stores the generated primary private key in memory. For example, the key terminal device 30 generates a primary key pair consisting of a primary private key and a primary public key by executing a key management client program under the control of the processor, and stores the primary private key in memory. In addition, the key terminal device 30 performs predetermined communication with the key management server 40 in order to register the generated public key with the key management server 40.

Secretly storing the primary private key means that the primary private key will never be leaked to the outside of the key terminal device 30. In other words, in the delivery of a file as described above via the communication network N, the primary private key will not be known/obtained by any device other than the key terminal device 30.

The key management server 40 is a computing device with a database (not shown) that manages the public key (i.e., the primary public key) for each user (in this case, regardless of whether being the sending user or the receiving user). The key management server 40 may be, for example: a web server computer that provides a Web Application Programming Interface (API) configured to output public keys in response to user queries; a public key server computer conforming to OpenPKSD for making public keys public based on OpenPGP technology; or the like.

The key management server 40 receives the primary public key, typically sent from the key terminal device 30, and registers it with the database. In addition, in response to a query containing the user's identifier, the key management server 40 refers to the database, extracts the public key assigned to the user according to the user's identifier, and outputs the same.

Any information that can uniquely identify an individual user may be used as an identifier for a user; for example, e-mail addresses, addresses and names, social security numbers, tax numbers, national identification numbers, account names used in various public services, and various private services, or any combination thereof, may be used.

In addition, in the case where there is a query containing an identifier of a user who is not registered in the database, the key management server 40 generates a provisional key pair consisting of a provisional private key and a provisional public key, provisionally registers the generated provisional key pair in the database in association with the identifier of the user, and transmits the provisional public key to the user.

In the case where such unregistered user is to register the primary public key of the primary key pair generated in the key terminal device 30 with the key management server 40, the key management server 40 first transmits the provisional key pair to the key terminal device 30 by using a secure communication means. After the provisional key pair is transmitted from the key management server 40 to the key terminal device 30, the key management server 40 invalidates the provisional key pair. The key terminal device 30, as mentioned above, creates a new primary key pair and transmits the primary public key of the primary key pair to the key management server 40. When the key management server 40 receives the primary public key from the key terminal device 30, the key management server 40 registers the same with the database.

In the present example, the file management server 10 and the key management server 40 are configured, without limitation, as separate computing devices, and they may instead be configured as a single computing device.

### (File Delivery Procedure)

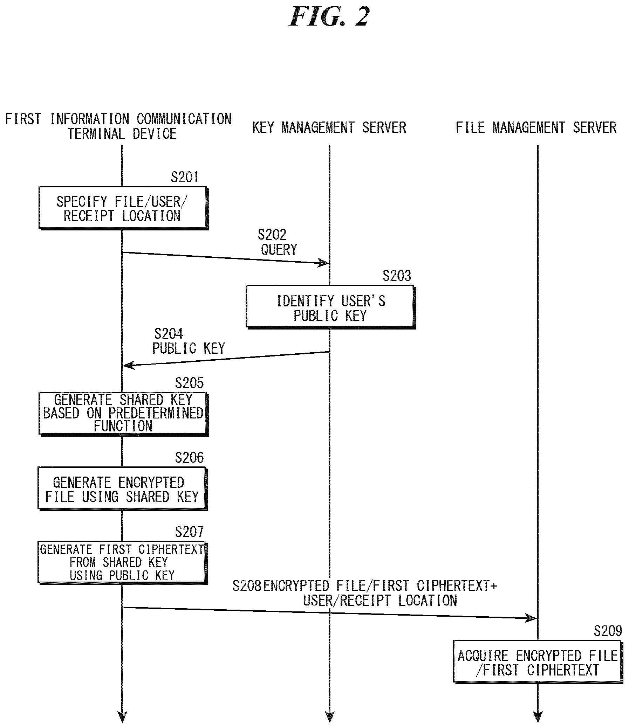

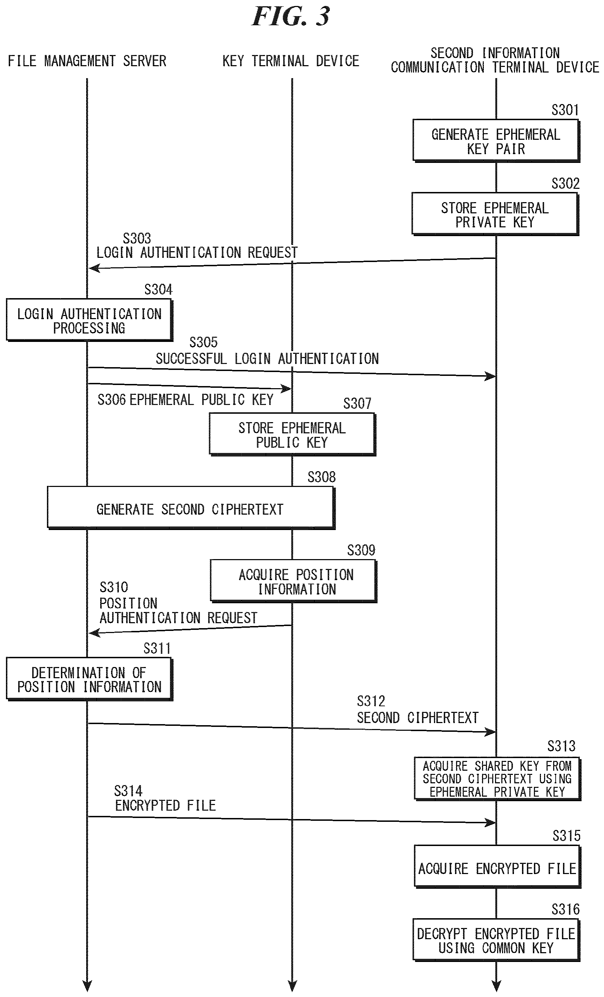

FIGS. 2 and 3 are sequence charts for describing a schematic processing example in a file management system according to an embodiment of the present invention. Specifically, FIG. 2 is a flowchart showing a processing example for uploading in the file management system 1, and FIG. 3 is a flowchart showing a processing example for downloading in the file management system 1.

### (File Upload)

As shown in FIG. 2, the sending user (the first user) operates the first information communication terminal device 20a to specify or select, as destination information, one or more files to be backed up or delivered, one or more receiving users to receive such files (the second user), and information about the receipt location (S201). For example, an identifier, such as a user ID or e-mail address, may be used to specify a user. In addition, for example, geographical position information (such as GPS coordinates) may be used to specify the receipt location. In this case, for the sake of usability, the receipt location may be a place name, address, and/or name (such as a building name, office, home, etc.) associated with the GPS coordinates. In addition, the receipt location may be a GPS coordinate acquired by geocoding, for example, via an external API, from the point pointed to by the user on the geographical map displayed on the user interface, the address entered, or the like. The receipt location of the receiving user may be selected from among the receipt locations registered in advance.

It should be noted here that an aspect has been described, without limitation, where the sending user specifies a file, a receiving user, and a receipt location to the first information communication terminal device 20a. For example, in the case of regularly backing up a file stored in a specific folder, the sending user may set its own identifier and the receipt location to the first information communication terminal device 20a in advance, and use the same when backing up the file. In addition, the first information communication terminal device 20a may scan the file placed in the folder, extract the relevant file, and specify the same.

The first information communication terminal device 20a then transmits a query containing the identifier of the specified receiving user to the key management server 40 (S202) in order to acquire the key information (i.e., the public key) of the specified receiving user. Upon receiving the query, the key management server 40 refers to the database, identifies the public key associated with the identifier indicated by the query (S203), and transmits an answer containing the identified public key to the first information communication terminal device 20a (S204). In the case where the public key (primary public key) of the receiving user is set to the first information communication terminal device 20a in advance via an information recording medium, and the like, the above communication between the first information communication terminal device 20a and the key management server 40 is omitted.

The first information communication terminal device 20a then generates a shared key according to a predetermined function (S205). The shared key is a random value generated using, for example, a random number function, and it is desirable that it has a sufficient bit length. The first information communication terminal device 20a subsequently generates a file encrypted using the generated shared key (hereinafter, this file will be referred to as the "encrypted file") (S206).

The shared key is a key commonly used by the sending user and the receiving user. Specifically, the shared key is used to encrypt a file to generate an encrypted file, and to decrypt the encrypted file to generate the original file. The shared key may be referred to as a symmetric key or a shared key. Various technologies, such as block cipher technologies such as IDEA, AES, Camellia, and the like, and stream cipher technologies such as RC4, FISH, MUGI, and the like, can be applied to encryption/decryption processing using the shared key.

It should be noted that the shared key may be the same for multiple files, or it may be different for each file. In addition, the shared key may be newly generated each time a file is backed up or delivered. Alternatively, the shared key may have an expiration period, and the same shared key may be used instead of being generated each time during the expiration period.

The first information communication terminal device 20a then generates a first ciphertext by encrypting the generated shared key using the acquired primary public key (S207). The first information communication terminal device 20a may generate the first ciphertext by encrypting the shared key and the receipt location in an integrated manner. The encryption processing using the primary public key relies on public-key cryptography, and various technologies, such as RSA ciphers, ElGamal ciphers, and elliptic curve ciphers, may be applied.

The first information communication terminal device 20a then transmits a file upload request, in which the encrypted file, the first ciphertext, and the receipt location are associated with the sending user, to the file management server 10 (S208). As such, the file management server 10 stores the encrypted file, the first ciphertext, and the receipt location in association with the sending user. Typically, the user operates the first information communication terminal device 20a to log into the file management server 10, and uploads the encrypted file along with the first ciphertext and the receipt location to a predetermined storage area of the file management server 10. This completes the processing related to uploading of the file by the sending user, and the sending user therefore does not need to operate the first information communication terminal device 20a anymore for subsequent processing.

Alternatively, the first information communication terminal device 20a may transmit an e-mail attached with the encrypted file to the specified sending user's e-mail address while transmitting the first ciphertext and the receipt location associated with the sending user to the file management server 10. In this case, the receiving user may acquire the encrypted file by using the second information communication terminal device 20b without accessing the file management server 10.

As mentioned above, since the first information communication terminal device 20a can acquire the primary public key from the key management server 40, and the like, and generate the shared key as necessary, it is not necessary to keep and manage the primary public key and the shared key in the first information communication terminal device 20a. In addition, the first information communication terminal device 20a does not need to know/obtain the private key (primary private key) assigned to the receiving user for decrypting the file by the second information communication terminal device 20b.

### (Download)

Next, the download processing in the file management system 1 will be described. As mentioned above, the primary private key of the receiving user is secretly stored in the key terminal device 30, and when downloading a file, the first information communication terminal device 20a, the second information communication terminal device 20b, and the file management server 10 do not need to know/obtain the primary private key.

As shown in FIG. 3, the second information communication terminal device 20b generates an ephemeral key pair consisting of an ephemeral public key and an ephemeral private key (S301), and secretly stores the ephemeral private key in the second information communication terminal device 20b (S302). The ephemeral key pair may be generated by the same public-key cryptography algorithm as the primary key pair assigned to the receiving user, or by a different public-key cryptography algorithm. The generated ephemeral key pair is to be temporarily used in the second information communication terminal device 20b, and may be generated each time a file is downloaded, or an expiration period may be set and the same ephemeral key pair may be used during the expiration period.

The receiving user then operates the second information communication terminal device 20b to make a request to the file management server 10 for login authentication (S303). The file management server 10 acquires the identifier/password and the ephemeral public key of the receiving user upon the login authentication. In response, the file management server 10 performs login authentication processing for the user (S304). The file management server 10 may acquire the ephemeral public key from the second information communication terminal device 20b if the authentication by the login authentication processing has been successful.

Here, the login authentication may be, for example, multi-factor authentication in which possession or use of the key terminal device 30 by the receiving user is one of the authentication factors. Specifically, upon operating the second information communication terminal device 20b and making a request to the file management server 10 for login authentication, the receiving user executes the key management client program on the key terminal device 30. Typically, in the login authentication processing, the file management server 10 may acquire the execution status transmitted from the key terminal device 30 to additionally determine whether the key management client program is executed on the key terminal device 30. In addition, the key management client program may be configured to accept authentication requests from the file management server 10 only for a predetermined period of time.

If the file management server 10 determines that the login authentication is successful as a result of the authentication processing in response to the request for login authentication, the file management server 10 transmits the authentication result to the second information communication terminal device 20b (S305) indicating that the login authentication is successful. The file management server 10 also transmits the ephemeral public key acquired from the second information communication terminal device 20b to the key terminal device 30 (S306), and, in response thereto, the key terminal device 30 stores the received ephemeral public key in memory (S307).

It should be noted that, in the above example, the ephemeral public key from among the ephemeral key pair generated by the second information communication terminal device 20b is transmitted to the key terminal device 30 via the file management server 10; however, the ephemeral public key may alternatively be transmitted to the key terminal device 30 using other secure transmission means. For example, the second information communication terminal device 20b may display a geometric pattern (e.g., a two-dimensional code) indicating the ephemeral public key on the user interface, and the user may operate the key terminal device 30 to read the displayed geometric pattern for the key terminal device 30 to acquire the ephemeral public key.

Further, other multi-factor authentication schemes may be employed for login authentication. For example, the key terminal device 30 may transmit the ephemeral public key acquired from the second information communication terminal device 20b to the file management server 10, and the file management server 10 may perform login authentication processing based on the ephemeral public key acquired from the login authentication request from the second information communication terminal device 20b and the ephemeral public key acquired from the key terminal device 30. In this case, the key terminal device 30 may electronically sign the acquired ephemeral public key using the stored primary private key and transmit the ephemeral public key together with the electronic signature to the file management server 10. In response, the file management server 10 may verify the validity of the received electronic signature using the primary public key.

Alternatively, the second information communication terminal device 20b may transmit the ephemeral public key to the key terminal device 30 by using, for example, short messages, e-mails, or the like. Alternatively, the second information communication terminal device 20b may: transmit the ephemeral public key to the key terminal device 30 by communication in accordance with the Bluetooth (registered trademark) standard and/or the Near Field Communication (NFC) standard, communication using USB cables, wired communication via network cables, Wi-Fi communication via wireless access points, mobile communication via carrier networks, or the like; or provide the ephemeral public key to the key terminal device 30 via a physical device, such as a USB memory device, or the like.

After successful login authentication, the file management server 10 and the key terminal device 30 work together to generate a second ciphertext (S308). The second ciphertext corresponds to the shared key encrypted using the ephemeral public key, and is the information used to decrypt the encrypted file. Specifically, the second ciphertext is generated based on the primary private key stored in the key terminal device 30, the ephemeral public key transmitted from the second information communication terminal device 20b, and the first ciphertext stored in the file management server 10. The processing for generating the second ciphertext will be described in detail later.

Meanwhile, the key terminal device 30 acquires geographical position information of itself by executing the key management client program (S309). For example, the key terminal device 30 may acquire the geographical position information by triggering the acquisition of the ephemeral public key. The geographical position information may be, for example, GPS coordinates acquired by utilizing the GPS function of the key terminal device 30. Alternatively, or in addition, the key terminal device 30 may use position information services utilizing Wi-Fi (registered trademark). The key terminal device 30 then transmits a position authentication request containing the acquired geographical position information to the file management server 10 (S310). Alternatively, the geographical position information may be transmitted from the key terminal device 30 to the file management server 10 upon, for example, additional authentication of whether the key management client program is executed on the key terminal device 30.

Upon receiving the position authentication request from the key terminal device 30, the file management server 10 determines whether the geographical position information indicated by the position authentication request corresponds to the receipt location specified by the first information communication terminal device 20a (S311). For example, the file management server 10 may determine that position authentication is successful if the geographical position information falls within a predetermined valid range from the receipt location specified by the sending user, taking into account the error in the geographical position information. Such valid range may, for example, be set arbitrarily by the user.

If the file management server 10 determines that position authentication is successful, the file management server 10 transmits the determination result indicating that position authentication is successful, including the generated second ciphertext, to the second information communication terminal device 20b (S312). Specifically, the file management server 10 transmits the second ciphertext to be used for decrypting the encrypted file to the second information communication terminal device 20b only if position authentication is successful.

Upon receiving the second ciphertext, the second information communication terminal device 20b decrypts the second ciphertext using the ephemeral private key that it secretly stores, and acquires the shared key (S313). The file management server 10 then transmits the encrypted file to the second information communication terminal device 20b (S314), and the second information communication terminal device 20b acquires the encrypted file and stores it in a predetermined folder (S315). The second information communication terminal device 20b may acquire the second ciphertext and the encrypted file collectively, instead of acquiring them separately.

It should be noted that the sending user may transmit an e-mail with the encrypted file as an attachment from the first information communication terminal device 20a to the receiving user's e-mail address, and the receiving user may receive the e-mail at the second information communication terminal device 20b and store the attachment (the encrypted file) in a predetermined folder. In this case, the receiving user may not need to log into the file management server 10 from the second information communication terminal device 20b to download the encrypted file.

The second information communication terminal device 20b then acquires the original file by decrypting the acquired encrypted file using the decrypted shared key (S316). This allows the file to be securely delivered between the sending user and the receiving user.

Additionally, the second information communication terminal device 20b may not receive the second ciphertext if it is determined by the file management server 10 that the position authentication has failed, and may instead receive the determination result indicating that the position authentication has failed. After receiving the determination result indicating that the position authentication has failed, the second information communication terminal device 20b aborts the decryption processing of the encrypted file, and may present an error message to the user.

As can be seen from the above, according to the present embodiment, the shared key is kept secret to the file management server 10 when generating the second ciphertext. Therefore, since even the administrator of the file management server 10 cannot decrypt the encrypted file, the security of the file delivery can be further improved.

In addition, if the geographical position information acquired by the key terminal device 30 fails to correspond to the receipt location specified by the sending user, the second information communication terminal device 20b cannot acquire the second ciphertext from the file management server 10, and therefore, it cannot acquire the shared key, either, and accordingly cannot decrypt the encrypted file. This means that the security of the file delivery can be further improved.

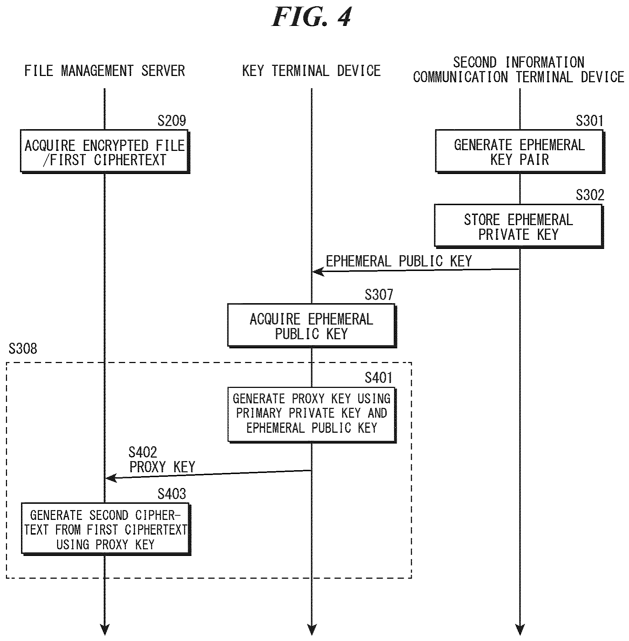

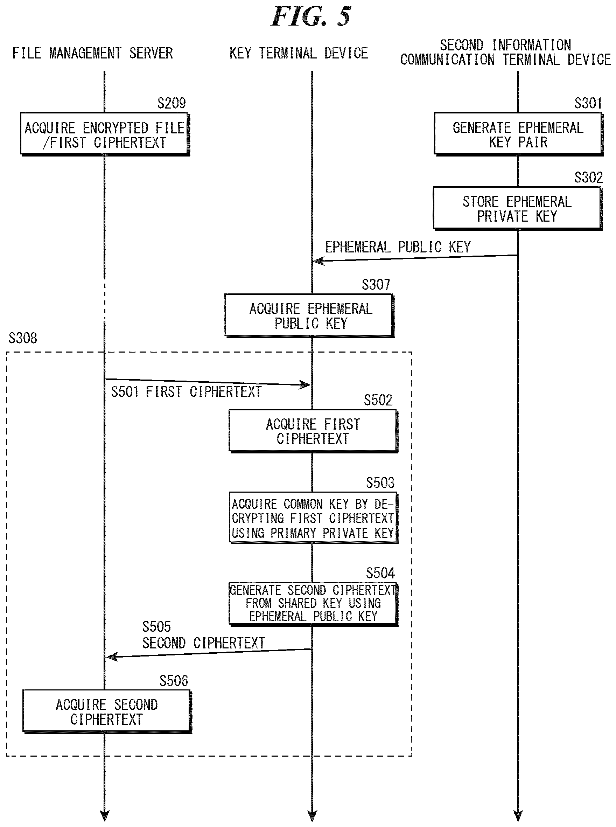

Next, the processing for generating the second ciphertext (S308) will be described in detail. Schemes for performing the generation processing of the second ciphertext include, for example, a scheme that utilizes proxy re-encryption (see FIG. 4), a scheme that performs decryption and encryption at a key terminal device 30 (see FIG. 5), and the like.

FIG. 4 is a sequence chart for describing a processing example for proxy re-encryption in a file management system according to an embodiment of the present invention.

As shown in FIG. 4, the key terminal device 30 first generates a proxy key based on the primary private key stored in such key terminal device 30 and the ephemeral public key transmitted from the second information communication terminal device 20b (S401). Here, it is assumed that the ephemeral public key has been transmitted directly from the second information communication terminal device 20b to the key terminal device 30, not via the file management server 10. The key terminal device 30 then transmits the generated proxy key to the file management server 10 (S402).

Meanwhile, the file management server 10 generates the second ciphertext by re-encrypting the first ciphertext received and stored from the first information communication terminal device 20a with the proxy key transmitted from the key terminal device 30 (S403). As mentioned above, if the position authentication has been successful, the file management server 10 transmits the generated second ciphertext to the second information communication terminal device 20b (S312 of FIG. 3).

In this way, the proxy re-encryption technology that allows for re-encryption of the ciphertext encrypted by an encryption system utilizing a public key from among a primary key pair may be applied to the generation of the ephemeral key pair. For example, the "public key encryption system AFGH06" of the primary key pair disclosed in the above-mentioned Non-Patent Document 1 can be applied to the invention. In such scheme, the primary key pair is based on a public-key encryption system on an elliptic curve, while the ephemeral key pair is based on a public-key encryption system on a finite field, which can only be re-encrypted once.

In the present invention, it goes without saying that, not only the proxy re-encryption technology disclosed in Non-Patent Document 1, but also various proxy re-encryption technologies can be applied. The generation of the primary key pair and the ephemeral key pair, the encryption processing using the public keys, and the decryption processing using the private keys, are then executed depending on the technologies employed.

FIG. 5 is a sequence chart for describing a processing example for creating a second ciphertext by a key terminal device in a file management system according to an embodiment of the present invention.

As shown in FIG. 5, the key terminal device 30 acquires an ephemeral public key as mentioned above (S307). In FIG. 5, it is assumed that the ephemeral public key has been transmitted directly from the second information communication terminal device 20b to the key terminal device 30, not via the file management server 10.

The file management server 10 also transmits the first ciphertext to the key terminal device 30 (S501), and the key terminal device 30 acquires the first ciphertext (S502). The key terminal device 30 then acquires the shared key by decrypting the first ciphertext acquired from the file management server 10 using the primary private key stored in such key terminal device 30 (S503).

The key terminal device 30 then generates the second ciphertext by encrypting the decrypted shared key using the ephemeral public key transmitted from the second information communication terminal device 20b (S504). The key terminal device 30 then transmits the generated second ciphertext to the file management server 10 (S505), and the file management server 10 acquires the second ciphertext (S506). As mentioned above, if the location authentication has been successful, the file management server 10 transmits the generated second ciphertext to the second information communication terminal device 20b (S312 of FIG. 3).

In the above example, the key terminal device 30 decrypts the shared key from the first cipher using the primary private key, and then encrypts the shared key using the ephemeral public key to generate the second ciphertext. Accordingly, various public-key cryptography systems may be utilized depending on the performance and/or applications of the devices by using the primary key pair and the ephemeral key pair.

Various information about the file delivery described above can be summarized as follows:
(a) the encrypted file is information in which a file is encrypted with a shared key;
(b) the first ciphertext is information in which the shared key is encrypted with a primary public key;
(c) decrypting the first ciphertext with the primary private key yields a shared key;
(d) the second ciphertext is information in which the shared key is encrypted with an ephemeral public key;
(e) the proxy key is derived from the ephemeral public key and the primary private key;
(f) by applying the proxy key to the first ciphertext, the second ciphertext is obtained while the shared key is kept secret;
(g) decrypting the second ciphertext with an ephemeral private key yields a shared key; and
(h) decrypting the encrypted file with the shared key yields the original file.

As can be seen from the above, according to the present embodiment, since there is no need to output the primary private key of the receiving user from the key terminal device 30 to the outside, the primary private key can be securely managed, without being exposed to a third party. In particular, according to the present embodiment, since the encrypted file can only be decrypted when the receiving user who possesses the key terminal device 30 operates the second information communication terminal device 20b at the receipt location specified by the sending user, the security of the file delivery can be further improved.

When the receiving user is to start using the service of the file management system 1 according to the present embodiment, it is desirable that a predetermined application program (i.e., the key management client program) is installed in the key terminal device 30, and the key terminal device 30 executes the key management client program, under the control of a processor, generates a primary key pair consisting of a primary public key and a primary private key, and transmits the primary public key to register the primary public key with the key management server 40.

There may be cases in which, when the sending user is to upload a file to the file management server 10, the receiving user has not yet started using the service of the file management system 1 of the present disclosure. In such a case, the key management server 40 may generate a primary key pair on behalf of the receiving user, and the sending user can then upload the file in advance.

Specifically, the key management server 40 determines whether the public key associated with the identifier of the receiving user indicated in the query transmitted from the first information communication terminal device 20a is registered, and if it is determined that the public key is not registered, the key management server 40 generates a provisional key pair consisting of a provisional public key and a provisional private key, and registers the generated provisional public key in association with the identifier. When the user associated with the identifier (i.e., the receiving user) installs the key management client program on the key terminal device 30 and starts using the service of the file management system 1, the key management server 40 transmits the provisional private key to the key terminal device 30, and the key terminal device 30 stores it secretly as the primary private key. The key management server 40 can then invalidate the provisional key pair.

Accordingly, even if the receiving user has not yet started using the service of the file management system 1, the sending user can still store the encrypted file for the file to be sent to the receiving user on the file management server 10. Meanwhile, if the receiving user starts using the service of the file management system 1 in response to a contact made by the sending user to the receiving user by an e-mail, or the like, the file can be obtained by downloading the file from the file management server 10.

After the receiving user obtains the encrypted file from the file management server 10 and decrypts the file, it is desirable that the receiving user immediately generates a new primary key pair in the key terminal device 30 and transmits the primary public key to the key management server 40 to be updated to the primary public key generated by the receiving user him/herself.

Further, when the key terminal device 30 installs a predetermined key management client program, the key terminal device 30 may immediately generate a new primary key pair, and may use both the provisional private key based on the provisional key pair and the primary private key related to the new primary key pair for a certain period after installation.

### (Decryption Processing)

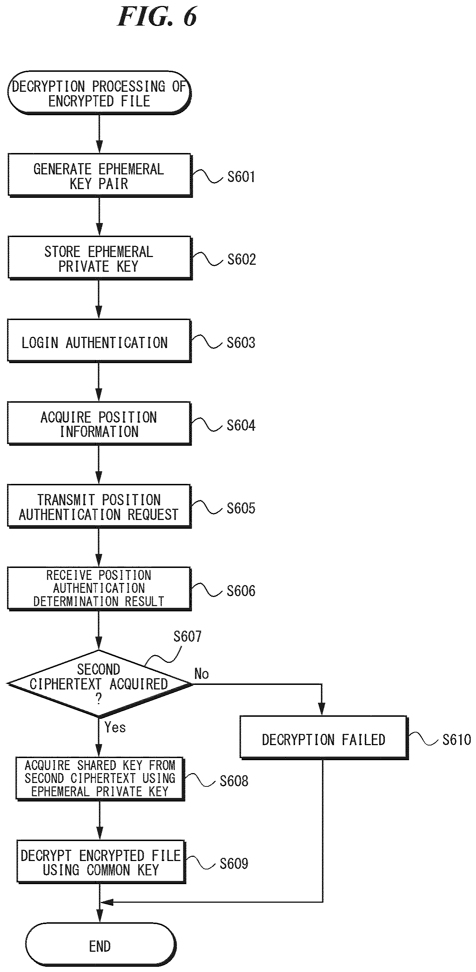

FIG. 6 is a flowchart for describing a processing example for decrypting an encrypted file in a file management system according to an embodiment of the present invention. Such processing may be achieved, for example, by the second information communication terminal device 20b executing a decryption program, under the control of the processor, in cooperation with predetermined hardware. In the following description of the processing, it will be assumed that the second information communication terminal device 20b has already acquired the encrypted file specified by the sending user. In addition, it will be assumed that the key terminal device 30 has executed the key management client program and acquired the ephemeral public key.

Specifically, as shown in FIG. 6, the second information communication terminal device 20b generates an ephemeral key pair consisting of an ephemeral public key and an ephemeral private key (S601), and secretly stores the ephemeral private key (S602).

The receiving user then operates the second information communication terminal device 20b to make a request to the file management server 10 for login authentication (S603). Upon the login authentication, the second information communication terminal device 20b transmits the identifier/password of the receiving user and the ephemeral public key to the file management server 10. In response, the file management server 10 performs login authentication processing. After performing the login authentication, the file management server 10 generates a second ciphertext, as mentioned above, in cooperation with the key terminal device 30.

The receiving user then operates the key terminal device 30 to execute the key management client program. In response, the key terminal device 30 acquires geographical position information of itself by using, for example, the GPS function, or the like (S604), and transmits a position authentication request containing the acquired geographical position information to the file management server 10 (S605). In response, the file management server 10 determines whether the geographical position information indicated in the position authentication request corresponds to the receipt location specified by the sending user, and transmits the determination result to the second information communication terminal device 20b. In the present example, the determination result indicating a successful position authentication contains the second ciphertext. Therefore, the second information communication terminal device 20b may acquire the second ciphertext only if the position authentication has been successful. In the present example, the key terminal device 30 acquires the geographical position information and transmits the same to the file management server 10, but the aspect is not limited to this, and the second information communication terminal device 20b may instead acquire the geographical position information and transmit the same to the file management server 10.

Based on the determination result received from the file management server 10, the second information communication terminal device 20b determines whether the determination result indicates a successful position authentication, or equivalently, whether the determination result yielded the second ciphertext (S607). If the second information communication terminal device 20b determines that the second ciphertext has been acquired (S607; Yes), the second information communication terminal device 20b decrypts the second ciphertext using the ephemeral private key and acquires the shared key (S608). The second information communication terminal device 20b then acquires the original file by decrypting the encrypted file using the shared key acquired as a result of the decryption (S609). This allows the file to be securely delivered between the sending user and the receiving user.

If the second information communication terminal device 20b determines that the determination result indicates that the position authentication has failed (S607; No), the decryption processing is terminated by performing predetermined error processing, indicating that the decryption has failed (S610).

### (Specific Example)

Next, a specific example of file delivery between a sending user and a receiving user in the above-mentioned file management system will be described.

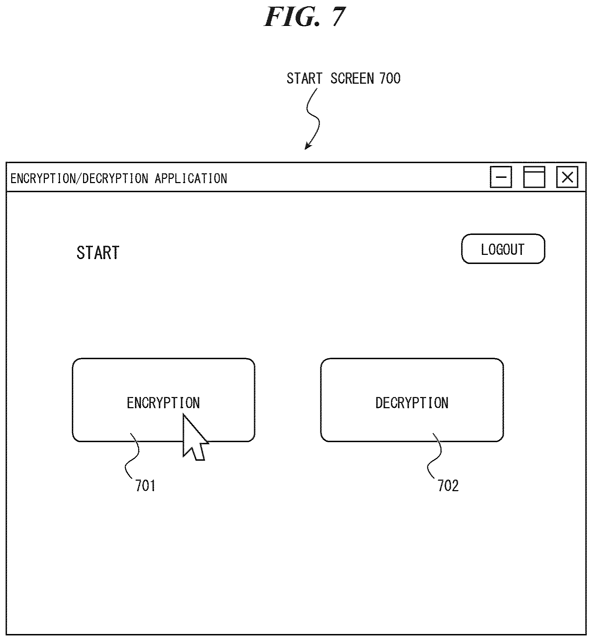

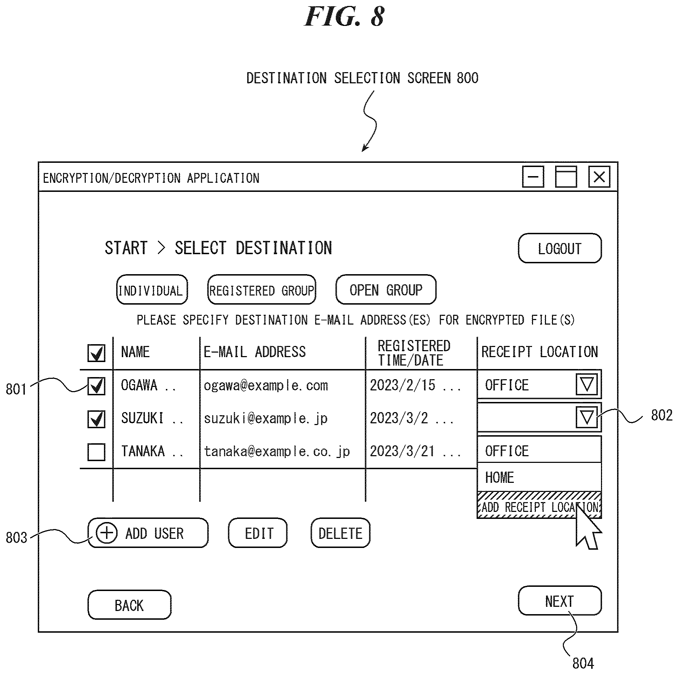

First, the sending user who wants to securely deliver an arbitrary file to the receiving user operates the first information communication terminal device 20a and executes an encryption/decryption client program to log into the file management server 10. Thereby, the first information communication terminal device 20a displays, for example, the start screen 700 as shown in FIG. 7 on the user interface. The sending user then selects the "ENCRYPT" icon 701 on the start screen 700. In response, the first information communication terminal device 20a displays, for example, a destination selection screen 800 as shown in FIG. 8 on the user interface of the first information communication terminal device 20a.

The sending user then specifies destination information, which is the destination of the file, in the destination selection screen 800. Specifically, the sending user selects an associated checkbox 801 in order to select a pre-registered destination (an e-mail address of the receiving user) in the destination selection screen 800. If a receiving user is not registered, the sending user may register the receiving user by selecting the "ADD USER" button 803 to cause a user registration screen (not shown) to be displayed, and entering the necessary information on the user registration screen.

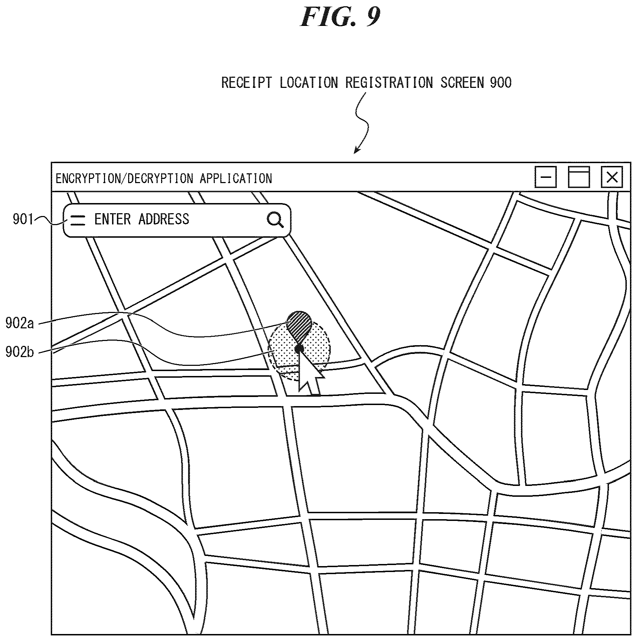

The sending user also specifies the location where the receiving user should receive the file, in the destination selection screen 800. For example, the sending user may select the location for receiving the file from a pull-down menu 802. In this case, by selecting "ADD RECEIPT LOCATION", the sending user may cause, for example, a receipt location registration screen 900 as shown in FIG. 9 to be displayed on the user interface, and specify the receipt location of the receiving user.

For example, in the receipt location registration screen 900, the sending user may enter the receiving user's work address in an address input field 901 and cause a geographical map around the work address to be displayed. Specifically, the first information communication terminal device 20a converts the entered address to GPS coordinates using geocoding, and displays a pin 902a and a valid range 902b at the point corresponding to the address on the geographical map. The valid range 902b is a rough guide range that takes the error of GPS coordinates into account. Although not shown, the user may change the size of the range 902b in, for example, the settings menu. The sending user may select and confirm the receipt location by clicking on the pin 902a on the geographical map. Although not shown, upon clicking on the pin 902a, the sending user may assign an arbitrary name (label), such as a building name, an office, home, or the like, to the receipt location and register the same.

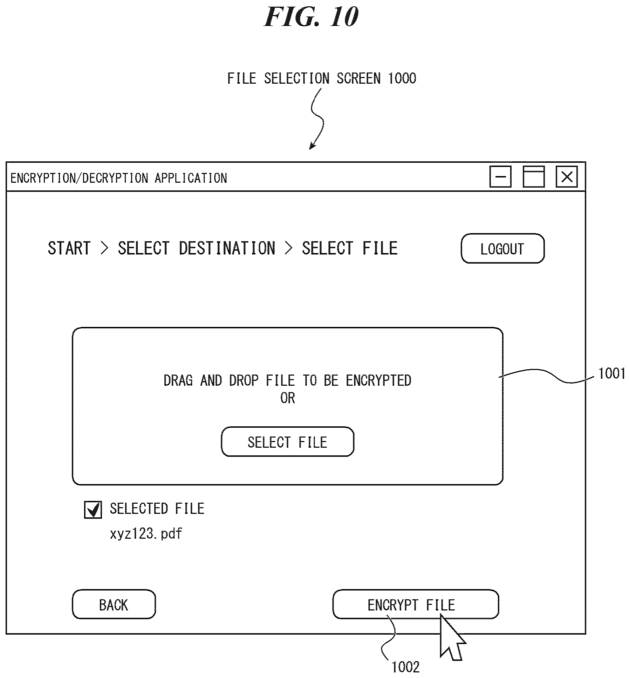

With reference back to FIG. 8, after selecting the desired destination and receipt location on the destination selection screen 800, the sending user may then select the "NEXT" button 804. In response, the first information communication terminal device 20a accesses the file management server 10, and the file management server 10 may cause, for example, a file selection screen 1000 as shown in FIG. 10 to be displayed on the user interface of the first information communication terminal device 20a.

In the file selection screen 1000, the sending user may select the desired file by dragging and dropping the same into a drag and drop area 1001. Alternatively, the sending user may select a file from the file selection dialog box. The sending user may select multiple files. After selecting the desired file, the sending user may select the "ENCRYPT FILE" button 1002.

When the sending user selects the "ENCRYPT FILE" button 1002, the first information communication terminal device 20a starts generating the encrypted file and the first ciphertext. Specifically, as mentioned above, the first information communication terminal device 20a generates a shared key according to a predetermined function, and encrypts the selected file using the generated shared key to generate the encrypted file. The first information communication terminal device 20a also acquires the primary public key from the key management server 40, and encrypts the shared key using the acquired primary public key to generate the first ciphertext. The first information communication terminal device 20a then transmits a file upload request that contains the encrypted file, the first ciphertext, the destination, and the receipt location to the file management server 10. As such, the file management server 10 stores the encrypted file, the first ciphertext, and the receipt location in association with the sending user.

Since the sending user does not upload the encrypted file to the file management server 10 and instead transmits the encrypted file by an e-mail, the encrypted file may be saved in the storage device of the first information communication terminal device 20a. The first information communication terminal device 20a may also specify the destination as an e-mail address by the encryption/decryption client program working together with the e-mail client program, and open an e-mail transmission window with the encrypted file being specified as an attachment.

Next, receipt of the file by the receiving user who wants to receive the file will be described. Here, it is assumed that the second information communication terminal device 20b of the receiving user has generated an ephemeral key pair and has stored the ephemeral private key. It is also assumed that the key terminal device 30 of the receiving user has stored the ephemeral public key.

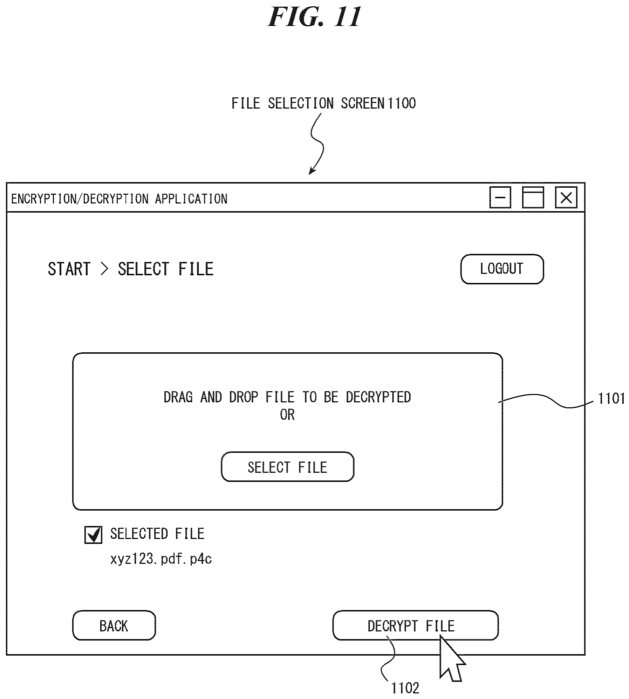

First, the receiving user who wants to receive the file from the sending user operates the second information communication terminal device 20b, logs into the file management server 10, and causes, for example, the start screen 700 as shown in FIG. 7 to be displayed on the user interface. In the present example, the layout of the start screen 700 is the same for the sending user and the receiving user. The receiving user selects the "DECRYPT" icon 702 on the start screen 700. In response, the second information communication terminal device 20b accesses the file management server 10, and the file management server 10 may cause, for example, a file selection screen 1100 as shown in FIG. 11 to be displayed on the user interface of the second information communication terminal device 20b.

In the file selection screen 1100, the receiving user may select the desired file (the encrypted file) by dragging and dropping the same into a drag and drop area 1101. Alternatively, the receiving user may select the encrypted file from the file selection dialog box. The receiving user may select multiple encrypted files. For example, the second information communication terminal device 20b may display a list of encrypted files that the receiving user can receive from the file management server 10, and the receiving user may select the desired encrypted file from the encrypted file list. Alternatively, the receiving user may open a folder received in a second e-mail, in which the encryption files are saved, and select the desired encryption file therefrom. After selecting the desired encrypted file, the receiving user selects the "DECRYPT FILE" button 1102.

The receiving user also selects the "DECRYPT FILE" button 1102. For example, at this time, the receiving user may execute the key management client program by operating the key terminal device 30 in accordance with a message (not shown) additionally displayed on the file selection screen 1100. The file management server 10 thereby acquires the second ciphertext in cooperation with the key terminal device 30. The key terminal device 30 also acquires the geographical position information of itself and transmits a position authentication request containing the acquired geographical position information to the file management server 10. Upon receiving the position authentication request from the key terminal device 30, the file management server 10 determines whether the geographical position information indicated by the position authentication request corresponds to the specified receipt location, and transmits the determination result to the second information communication terminal device 20b. In the present example, the determination result indicating a successful position authentication contains the second ciphertext. Upon acquiring the second ciphertext from the file management server 10 by way of a successful position authentication, the second information communication terminal device 20b decrypts the acquired second ciphertext by using the ephemeral private key to generate a shared key. The second information communication terminal device 20b then acquires the original file by decrypting the encrypted file by using the generated shared key. This allows the file to be securely delivered between the sending user and the receiving user.

As can be seen from the above, according to the present embodiment, since there is no need to output the primary private key of the receiving user from the key terminal device 30 to the outside, the primary private key can be securely managed without being exposed to a third party. In particular, according to the present embodiment, since the encrypted file can only be decrypted when the receiving user who possesses the key terminal device 30 operates the second information communication terminal device 20b at the receipt location specified by the sending user, the security of the file delivery can be further improved.

### <Second Embodiment>

The present embodiment is a variation of the first embodiment, and differs from the first embodiment in that the file can only be decrypted if both the information communication terminal device and the key terminal device of the second user, who is the recipient of the file, are present at the receipt location specified by the first user. Hereinafter, detailed descriptions of the same matters as the first embodiment are omitted as appropriate.

In order to estimate the geographical position of the second information communication terminal device 20b, the second information communication terminal device 20b itself may be implemented with the function of acquiring geographical position information. For example, the second information communication terminal device 20b may be implemented with the GPS function. Alternatively, the second information communication terminal device 20b may be connected to a USB-standard device implemented with the GPS function. In such aspect, the second information communication terminal device 20b may transmit, for example, its own geographical position information acquired after logging into the file management server 10.

Meanwhile, if the second information communication terminal device 20b is a desktop computer, or the like, the GPS function may often not be implemented, and there is also a lack of motivation to connect an external GPS device. Therefore, in such a case, for example, the global IP address assigned to the router in the LAN to which the second information communication terminal device 20b is connected, or the like, may be used for the geographical position information of the second information communication terminal device 20b. In other words, in network communication, since the communication data transmitted from the second information communication terminal device 20b contains the global IP address assigned to the router, the file management server 10 may extract the global IP address from the communication data and estimate the geographical position of the second information communication terminal device 20b by referring to the IP address database. It should be noted here that, in general, since the error in the location estimation using the global IP address tends to be large, it is preferable for the file management server 10 to perform position authentication of the second user (the second information communication terminal device 20b) by expanding the error tolerance range.

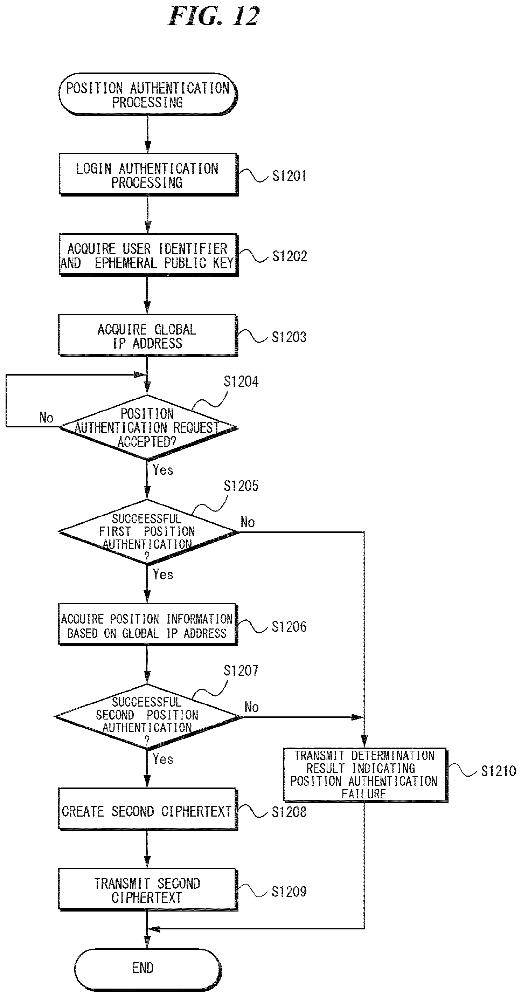

FIG. 12 is a flowchart for describing a processing example for position authentication by a file management server in a file management system according to an embodiment of the present invention. In the following example, it is assumed that the global IP address is used for the location estimation of the second information communication terminal device 20b.

As shown in FIG. 12, the file management server 10 accepts the login authentication request transmitted from the second information communication terminal device 20b of the receiving user, and performs the login authentication (S1201). Upon performing the login authentication, the file management server 10 acquires the identifier/password of the receiving user and the ephemeral public key from the second information communication terminal device 20b. At this time, the file management server 10 acquires, from the communication data, the global IP address assigned to the router in the LAN to which the second information communication terminal device 20b is connected (S1203).

After performing the login authentication, the file management server 10 waits until it receives a position authentication request from the key terminal device 30 (S1204). Upon receiving a position authentication request from the key terminal device 30 (S1204; Yes), the file management server 10 determines the success or failure of the first position authentication processing based on the position authentication request (S1205). Specifically, the file management server 10 determines whether the geographical position information indicated in the position authentication request (referred to as the "first geographical position information") corresponds to the receipt location specified by the sending user. If the file management server 10 determines that the first geographical position information fails to correspond to the specified receipt location (S1205; No), the file management server 10 transmits the determination result to the second information communication terminal device 20b indicating that the position authentication has failed (S1210).

On the other hand, if the file management server 10 determines that the first geographical position information does correspond to the specified receipt location (S1205; Yes), the file management server 10 acquires second geographical position information by referring to the IP address database based on the acquired global IP address (S1206). The file management server 10 then determines the success or failure of the second position authentication processing based on the acquired second geographical position information (S1207). Specifically, the file management server 10 determines whether the acquired second geographical position information corresponds to the specified receipt location.

If the file management server 10 determines that the second geographical position information fails to correspond to the specified receipt location (S1207; No), the file management server 10 transmits, in a similar manner to that described above, the determination result to the second information communication terminal device 20b indicating that the position authentication has failed (S1210). In other words, in the present embodiment, the presence of the key terminal device 30 at the specified receipt location is not enough, and the second information communication terminal device 20b also needs to be present at the specified receipt location.

On the other hand, if the file management server 10 determines that the second geographical position information does correspond to the specified receipt location (S1207; Yes), the file management server 10 generates the second ciphertext, as mentioned above, in cooperation with the key terminal device 30 (S1208). The file management server 10 then transmits the generated second ciphertext to the second information communication terminal device 20b (S1209).

As can be seen from the above, according to the present embodiment, the same advantages or effects as those of the embodiment described above may be achieved. In particular, according to the present embodiment, since the determination as to whether the receiving user is at the receipt location specified by the sending user is made based not only on the first geographical position information indicated by the key terminal device 30 but also on the second geographical position information indicated by the second communication terminal device 20b, the security of the file delivery can be further improved. In other words, since the encrypted file can only be decrypted at a location where the receiving user possesses the key terminal device 30 and the information communication terminal device 20b used by the receiving user is placed, the sending user can further improve the security of file delivery.

### (Variation Example)

In the above example, the file management server 10 determined the success or failure of the position authentication based on the first geographical position information acquired from the key terminal device 30 and the second geographical position information of the second information communication terminal device 20b; however, the success or failure of the position authentication may also be determined based, for example, on whether the second information communication terminal device 20b and the key terminal device 30 are connected to a router in the same LAN.

For example, it may be assumed that the key terminal device 30 is connectable to a Wi-Fi (registered trademark) access point provided by a router in a LAN. Upon decrypting the encrypted file, the receiving user may switch the key terminal device 30 from the carrier network to the wireless communication connection to the access point. The file management server 10 may thereby acquire, in the network communication with the key terminal device 30, the global IP address assigned to the router in the LAN to which the key terminal device 30 is connected.

Specifically, as mentioned above, the file management server 10 acquires a global IP address from the second information communication terminal device 20b and a global IP address from the key terminal device 30, and determines whether these global IP addresses match. Since the encrypted file can only be decrypted when, in addition to the receiving user being at the receipt location specified by the sending user, the second information communication terminal device 20b and the key terminal device 30 are both at that location (within the same LAN), the security of the file delivery can be further improved. It should be noted that, in this case, the determination based on the geographical position information by the GPS function of the key terminal device 30 may be made or omitted.

Alternatively, it may be additionally determined whether the second information communication terminal device 20b and the key terminal device 30 are connected via the Bluetooth (registered trademark) communication or the Near Field Communication (NFC). It is thereby possible to estimate that the second information communication terminal device 20b and the key terminal device 30 are in the vicinity of the receiving user, and thus, in a similar manner to that described above, the accuracy of the success or failure of the determination of position authentication can be increased. Alternatively, the second information communication terminal device 20b may display a geometric pattern (e.g., a two-dimensional code) indicating the one-time authentication code presented by the file management server 10 on the user interface, and the key terminal device 30 may acquire the geographical position information by the receiving user operating the key terminal device 30 to read the displayed geometric pattern, and such geographical position information may be transmitted to the file management server 10. In short, since the key terminal device 30 may be location-authenticated by the geographical position information from the GPS function, whether the second information communication terminal device 20b and the key terminal device 30 are in the vicinity of the receiving user can be estimated through such display on the user interface.

In addition, the information communication terminal device 20b operated by the second user and the key terminal device 30 may be the same device (e.g., a smartphone). In this case, the geographical position information of the information communication terminal device 20b and the geographical position information of the key terminal device 30 should match.

### <Third Embodiment>

The present embodiment is a variation or application of the first and second embodiments mentioned above, and is characterized in that control is performed so that only the user who has successfully decrypted the file as a login to the service can enjoy benefit of a service. Specifically, the above embodiments have been described by focusing on a file sharing service using characteristic authentication technology; however, in the present embodiment, various system examples will be described, in which the authentication technology related to the above embodiments is applied to allow the services to be made available to users who have successfully acquired login information (decryption of the file).

As an example, the present invention may be applied to a corporate security system (which can be regarded as the equivalent of the file management system 1 shown in FIG. 1). Specifically, there may be a case in which a temporary worker dispatched from a temporary worker dispatch agency to a company may only be allowed access to the server of the temporary worker dispatch agency from the company to which the worker is dispatched. In this case, the administrator (corresponding to the first user) of the temporary worker may set, for the temporary worker (corresponding to the second user), the success of the file decryption by using position authentication, on the condition of logging into the server (corresponding to the file management server). For example, the server may allow the temporary worker to login in response to a successful file decryption. Alternatively, the original file may contain the login information, and the temporary worker may log into the server using the login information contained in the decrypted file. This allows the temporary worker to log into the server and enjoy the service provided by the server, on the condition that the worker is physically present at the company to which the worker is dispatched.

As another example, the present invention may also be applied to electronic tickets, passes, or coupons or certification badges (hereinafter referred to as the "electronic ticket, etc."). Examples of an electronic ticket, etc., may include admission tickets to venues where events, or the like, are held, tickets for vehicles, and download/viewing tickets that are valid only at specified locations. Specifically, the administrator of the issuer of the electronic ticket, etc.(corresponding to the first user): operates the information communication terminal device 20a; specifies geographical position information indicating where the electronic ticket, etc., can be used and the purchaser of the electronic ticket, etc. (corresponding to the second user); and uploads the encrypted file related to the electronic ticket, etc., to the server along with the first ciphertext. The purchaser of the electronic ticket, etc., can acquire the original file by decrypting the encrypted file by using an information communication terminal device 20 that functions as the key terminal device 30 at the specified location (venue, etc.) in advance, and can enjoy various services by using the original file. For example, the purchaser may enter the venue by having the geometric pattern indicated in the decrypted file (electronic ticket, etc.) read by a scanner installed at the entrance gate of the venue. Alternatively, there may be aspects where the purchaser may access the content indicated by the decrypted file at the venue and/or may participate in the sweepstakes and services that can only be entered at the venue, by using the information indicated by the electronic ticket, etc.

The above-described respective embodiments are illustrations for describing the present invention, and are not intended to limit the present invention only to these embodiments. The present invention may be implemented in various forms, as long as they do not deviate from the gist of the invention.

For example, in the above embodiments, an embodiment has been described, without limitation, in which the sending user registers the receipt location. For example, a system administrator, such as a company or business operator, may collectively specify the receipt location when regarding the employees belonging to the company or business as the receiving users. This allows companies, and the like, to improve the security of file delivery by implementing a system policy that prohibits employees from receiving the file outside the office by specifying the receipt location of the file of the employees to the office.

Further, the steps, actions, or functions in the method disclosed in the present specification may be implemented in parallel or in different order, as long as there is no inconsistency in the results. The described steps, actions, and functions are provided as examples only, and some of the steps, actions, and functions may be omitted and may be performed as one entity by being combined with each other, and other steps, actions, or functions may be added, to the extent that they do not deviate from the gist of the invention.

In addition, various embodiments are disclosed in the present specification, but specific features (technical matters) in one embodiment may be added to other embodiments with appropriate improvements, or may be replaced with specific features in such other embodiments, and such embodiments are also included in the gist of the present invention.

### LIST OF REFERENCE SIGNS

- 1 ...: File management system
- 10 ...: File management server
- 20 ...: Information communication terminal device
20a ... First information communication terminal device
20b ... Second Information communication terminal device
- 30 ...: Key terminal device
- 40 ...: Key management server

## Claims

1. A file management system that allows for transmission of a file between a first information communication terminal device of a first user and a second information communication terminal device of a second user, comprising:
a file management server that is communicably connectable with each of the first information communication terminal device and the second information communication terminal device; and
a key terminal device that is communicably connectable with the file management server and is capable of acquiring geographical position information,
wherein the file management server:
acquires, from the first information communication terminal device, destination information containing at least an identifier of the second user and a receipt location of the file;
receives, from the key terminal device, a position authentication request containing geographical position information; and
performs determination of the success or failure of position authentication based on the receipt location contained in the destination information and the geographical position information contained in the position authentication request to transmit a result of the determination to the second information communication terminal device, and
wherein the second information communication terminal device decrypts the encrypted file, if the result of the determination indicates that the position authentication has been successful.

2. The file management system according to claim 1, wherein the first information communication terminal device:
generates a shared key according to a predetermined function; and
creates the encrypted file using the generated shared key.

3. The file management system according to claim 2, wherein the first information communication terminal device:
generates a first ciphertext by encrypting the shared key using a public key; and
transmits the generated first ciphertext to the file management server.

4. The file management system according to claim 3,
wherein the second information communication terminal device generates an ephemeral key pair consisting of an ephemeral private key and an ephemeral public key, according to a predetermined key generation algorithm, and stores the ephemeral private key from among the ephemeral key pair,
wherein the key terminal device stores the ephemeral public key from among the ephemeral key pair, and
wherein the file management server generates a second ciphertext by using the ephemeral public key in cooperation with the key terminal device, and
if the position authentication has been successful, the file management server transmits the result of the determination containing the generated second ciphertext to the second information communication terminal device.

5. The file management system according to claim 4, wherein the second information communication terminal device:
decrypts the second ciphertext using the ephemeral private key in order to acquire the shared key, and
decrypts the encrypted file by using the shared key acquired by decrypting the second ciphertext.

6. The file management system according to claim 4, wherein the file management server
acquires the ephemeral public key from the second information communication terminal device, and
transmits the acquired ephemeral public key to the key terminal device.

7. The file management system according to claim 6, wherein the file management server acquires the ephemeral public key in a process of login authentication with the second information communication terminal device.

8. The file management system according to claim 7, wherein the file management server determines the success or failure of the login authentication through multi-factor authentication based on possession or use of the key terminal device.

9. The file management system according to claim 1, wherein the receipt location is geographical position information specified by the first user.

10. The file management system according to claim 9, wherein the geographical position information specified by the first user is specified based on a geographical map displayed on a user interface of the first information communication terminal device.

11. The file management system according to claim 1, wherein the file management server determines the success or failure of the position authentication based on the geographical position information of the second information communication terminal device.

12. The file management system according to claim 11, wherein the file management server determines that the position authentication has been successful if each of the geographical position information contained in the position authentication request and the geographical position information of the second information communication terminal device corresponds to the receipt location contained in the destination information.

13. The file management system according to claim 11, wherein the geographical position information of the second information communication terminal device is a global IP address.

14. A file management server that is communicably connectable to each of a first information communication terminal device of a first user, a second information communication terminal device of a second user, and a key terminal device, wherein the file management server is configured to perform:
processing of acquiring, from the first information communication terminal device, destination information containing at least an identifier of the second user and a receipt location of a file;
processing of receiving a position authentication request containing geographical position information acquired by the key terminal device;
processing of performing determination of the success or failure of position authentication based on the receipt location contained in the destination information and the geographical position information contained in the position authentication request; and
if the position authentication is successful, processing of transmitting, to the second information communication terminal device, a ciphertext to be used for decrypting an encrypted file obtained by the first information communication terminal device encrypting the file.

15. A file transmission method that allows for transmission of a file between a first information communication terminal device of a first user and a second information communication terminal device of a second user, comprising:
specifying, in the first information communication terminal device, destination information containing an identifier of the second user and a receipt location of the file;
generating an encrypted file by encrypting the file in the first information communication terminal device;
acquiring the specified receipt location in a file management server;
storing the generated encrypted file in the second information communication terminal device;
transmitting geographical position information acquired in a key terminal device possessed by the second user from the key terminal device to the file management server;
determining whether the geographical position information corresponds to the specified receipt location in the file management server to transmit a result of the determination to the second information communication terminal device; and
if the result of the determination indicates that the geographical position information corresponds to the specified receipt location, decrypting the encrypted file to acquire the original file in the second information communication terminal device.

16. The file transmission method according to claim 15, wherein the creating the encrypted file includes:
generating a shared key according to a predetermined function; and
creating the encrypted file using the generated shared key.

17. The file transmission method according to claim 16, further comprising:
generating a first ciphertext by encrypting the shared key by using the public key; and
transmitting the generated first ciphertext to the file management server.

18. The file transmission method according to claim 17, comprising:
generating an ephemeral key pair consisting of an ephemeral private key and an ephemeral public key in accordance with a predetermined key generation algorithm in the second information communication terminal device;
storing the ephemeral private key from among the ephemeral key pair in the second information communication terminal device;
storing the ephemeral public key from among the ephemeral key pair in the key terminal device;
generating, in the file management server, a second ciphertext by using the ephemeral public key in cooperation with the key terminal device; and
based on the result of the determination indicating that the geographical position information corresponds to the specified receipt location, storing the generated second ciphertext in the second information communication terminal device.

19. The file transmission method according to claim 18, further comprising decrypting the second ciphertext using the ephemeral private key in order to acquire the shared key in the second information communication terminal device,
wherein the decrypting the encrypted file includes decrypting the encrypted file using the shared key acquired by decrypting the second ciphertext.

20. The file transmission method according to claim 18, further comprising, in the file management server:
acquiring the ephemeral public key from the second information communication terminal device; and
transmitting the acquired ephemeral public key to the key terminal device.

21. The file transmission method according to claim 20, further comprising, in the file management server, acquiring the ephemeral public key in a process of login authentication with the second information communication terminal device.

22. The file transmission method according to claim 21, further comprising, in the file management server, determining the success or failure of the login authentication through multi-factor authentication based on possession or use of the key terminal device.

23. The file transmission method according to claim 15, wherein the receipt location is geographical position information specified by the first user.

24. The file transmission method according to claim 23, wherein the geographical position information specified by the first user is specified based on a geographical map displayed on a user interface of the first information communication terminal device.

25. A file management method to be executed by a file management server that is communicably connectable to each of a first information communication terminal device of a first user, a second information communication terminal device of a second user, and a key terminal device, comprising:
acquiring, from the first information communication terminal device, destination information containing at least an identifier of the second user and a receipt location of a file;
receiving a position authentication request containing geographical position information acquired by the key terminal device;
performing determination of the success or failure of position authentication based on the receipt location contained in the destination information and the geographical position information contained in the position authentication request; and
if the position authentication has been successful, transmitting, to the second information communication terminal device, information to be used for decrypting an encrypted file obtained with encrypting the file by the first information communication terminal device.

26. A system for controlling, by a first information communication terminal device of a first user, whether or not a second user can enjoy benefit of a service in a second information communication terminal device, comprising:
a server that is communicably connectable with each of the first information communication terminal device and the second information communication terminal device; and
a key terminal device that is communicably connectable to the server and is capable of acquiring geographical position information,
wherein the server operates to:
acquire, from the first information communication terminal device, destination information containing at least an identifier of the second user and a location for enjoying the benefit of the service;
receive a position authentication request containing geographical position information from the key terminal device;
perform determination of the success or failure of position authentication based on the location for enjoying the benefit of the service contained in the destination information and the geographical position information contained in the position authentication request to transmit a result of the determination to the second information communication terminal device; and
cause the second information communication terminal device to provide the benefit of the service if the result of the determination indicates that the position authentication has been successful.
